# EUROPÄISCHE PATENTSCHRIFT

(11) **EP 2 344 386 B1**
(45) Veröffentlichungstag und Bekanntmachung des Hinweises auf die Patenterteilung: **20.02.2013**
(21) Anmeldenummer: 09793449.1
(22) Anmeldetag: 09.11.2009
(51) Int. Cl.: G01C 21/00, G08G 5/06, B64F 1/22, B64F 1/00, B63B 21/56, B60D 1/30

(54) **VERFAHREN UND SYSTEM ZUR BESTIMMUNG EINER POSITION UND ORIENTIERUNG EINER VERFAHRBAREN LAST**
METHOD AND SYSTEM FOR DETERMINING A POSITION AND ORIENTATION OF A DISPLACEABLE LOAD
PROCEDE ET SYSTEME DE DETERMINATION D'UNE POSITION ET D'UNE ORIENTATION D'UNE CHARGE MOBILE

(30) Priorität: 12.11.2008 DE 102008057027
(43) Veröffentlichungstag der Anmeldung: 20.07.2011
(73) Patentinhaber: Peiker acustic GmbH & Co. KG, 61381 Friedrichsdorf (DE); beyo GmbH, 14467 Potsdam (DE)
(72) Erfinder: RICHTER, Lutz, 15299 Mixdorf (DE); PEIKER, Andreas, 61381 Friedrichsdorf (DE); KITZENMAIER, Peter, 14469 Potsdam (DE); GÖKTEKIN, Cüneyt, 14467 Potsdam (DE); TENCHIO, Oliver, 14469 Potsdam (DE)
(74) Vertreter: Otten, Herbert
(86) Internationale Anmeldenummer: PCT/DE2009/001558
(87) Internationale Veröffentlichungsnummer: WO 2010/054624

(56) Entgegenhaltungen:
- EP-A2- 2 303 697
- DE-A1- 19 808 836
- DE-A1-102008 035 342
- FR-A1- 2 675 919
- US-A- 5 364 117
- US-A1- 2004 225 440
- US-A1- 2008 083 851
- US-B1- 6 305 484

## Beschreibung

Die Erfindung betrifft ein Verfahren zur Bestimmung einer Position und/oder Orientierung einer verfahrbaren Last gemäß dem Oberbegriff des Anspruchs 1 und ein Positions- und Orientierungsbestimmungssystem für ein Gespann gemäß dem Oberbegriff des Anspruchs 12.

Ein solches Orientierungsbestimmungssystem ist aus Dokument DE 19808836 A1 bekannt, welches den nächst liegenden Stand der Technik darstellt.

Des weiteren ist ein Verfahren zur Bestimmung einer Position oder Orientierung von der EP 2303697 bekannt, welche der Stand der Technik gemäß Art 54(3) EPÜ darstellt.

Auf Flugplätzen müssen immer größer werdende Flugzeuge von Zugfahrzeugen rangiert werden. Hierbei nimmt das Zugfahrzeug das Flugzeug, welches eine Last bildet, in der Regel an dessen Bugrad auf, um das Flugzeug zum Beispiel zwischen parkenden Flugzeugen oder in einen Hangar zu rangieren. Beim Rangieren wir der Fahrer des Zugfahrzeugs in der Regel durch sogenannte "Wing-Watcher" unterstützt, dies sind Personen, welche insbesondere die Spitzen der Tragflächen und das Heck beobachten und den Fahrer über Funk vor Kollisionen zum Beispiel mit anderen Flugzeugen, Fahrzeugen, Laternen oder dem Hangar warnen. Der Personalaufwand für derartige Rangiervorgänge ist groß und weiterhin sind die Bewegungen des Flugszeugs für den Menschen oft nur schwer einschätzbar, da sich auf Grund der Kinematik zwischen Zugfahrzeug und Flugzeug aus kleinen Bewegungen des Zugfahrzeugs oft große und schnelle Bewegungen des Flugzeugs ergeben. Die Systeme des Flugzeugs sind zur Unterstützung der Rangiervorgänge in der Regel nicht nutzbar, da das Flugzeug während des Rangiervorgangs in der Regel komplett abgeschaltet und unzugänglich ist.

Der Erfindung liegt die Aufgabe zugrunde, ein Verfahren und ein System zu entwickeln, durch welches Kollisionen mit höherer Wahrscheinlichkeit vermieden werden können.

Diese Aufgabe wird ausgehend von den Merkmalen des Oberbegriffs des Anspruchs 1 bzw. des Anspruchs 12 durch die kennzeichnenden Merkmale des Anspruchs 1 bzw. 12 gelöst. In den Unteransprüchen sind vorteilhafte und zweckmäßige Weiterbildungen angegeben.

Das erfindungsgemäße Verfahren zur Bestimmung einer Position und Orientierung einer verfahrbaren Last, bei welchem die Last mit einem Zugfahrzeug verbunden ist, sieht vor, eine Position und eine Orientierung des Zugfahrzeugs zu bestimmen und weiterhin eine Relativposition der Last, welche die Last zu dem Zugfahrzeug einnimmt, mittels einer Sensorik zu erfassen und die Position und die Orientierung der Last aus der Position des Zugfahrzeugs und der Relativposition der Last zu bestimmen. Durch dieses Verfahren für eine Berechung der Position der Last, welche ausschließlich auf Daten beruht, welche von dem Zugfahrzeug aus ermittelt werden, ist es möglich, ohne dass eine Manipulation an der Last erforderlich ist, die Position der Last verfügbar zu machen. Kern der Erfindung ist somit eine Fernbestimmung der Position der Last, durch eine Zusammenführung von Daten aus unterschiedlichen System, welche von dem Zugfahrzeug aus ermittelt werden. Da die Last als Flugzeug ausgebildet ist, wird davon ausgegangen, dass das Flugzeug an einer definierten Parkposition in einer vorgegebenen Orientierung steht und dass diese Parkposition für die verfahrensgemäße Bestimmung bekannt ist.

Die Erfindung sieht weiterhin vor, zur Bestimmung der Position (III) und der Orientierung (IV) der Last (2) zusätzlich die Orientierung (II) des Zugfahrzeugs (1) zu verwenden. Hierdurch ist es möglich auch bei einer Aufnahme der Last aus einer undefinierten Parkposition, in welcher die Orientierung der Last nicht bekannt ist, das Gespann direkt nach der Verbindung von Zugfahrzeug und Last korrekt zu visualisieren.

Zur Bestimmung der Orientierung des Zugfahrzeugs ist es vorgesehen entweder zwei im Zugfahrzeug in definierten Stellungen zueinander angeordnete Positionsbestimmungseinrichtungen zu verwenden oder eine Positionsbestimmungseinrichtung und einen dem Zugfahrzeug zugeordneten Kompass zu verwenden oder eine Positionsbestimmungseinrichtung und Daten einer vorhergehenden Position des Zugfahrzeugs zu verwenden. Hierdurch ist es möglich die Orientierung des Zugfahrzeugs zu bestimmen, ohne dass das Zugfahrzeug zuvor bewegt wurde. Dies ist insbesondere dann von Vorteil, wenn das Zugfahrzeug mit einer angehängten Last längere Zeit geparkt war, da dann bereits vor der ersten Bewegung die Orientierung des Zugfahrzeugs und der Last bestimmbar ist.

Das erfindungsgemäße Verfahren sieht weiterhin vor, auf der Grundlage der ermittelten Position und Orientierung der Last, abhängig von der durch eine senkrechte Projektion der Last ermittelten Lastkontur, welche die Umrisse der Last zeigt, oder abhängig von einem Volumenmodell der Last, die Last mit der Lastkontur grafisch in einer zweidimensionalen Karte oder das Volumenmodell grafisch in einem dreidimensionalen Raum darzustellen, wobei insbesondere anhand von Kartendaten oder Raumdaten Kollisionspunkte zwischen der Last und mit den durch die Kartendaten oder durch die Raumdaten erfassten Hindernissen errechnet werden, welche bei bestimmten Fahrbewegungen des Zugfahrzeugs auftreten. Hierdurch ist es möglich die Last an Hindernissen, welche in der zweidimensionalen Karte oder den Raumdaten verzeichnet sind, kollisionsfrei vorbeizubewegen.

Weiterhin sieht die Erfindung vor, das Zugfahrzeug auf der Grundlage der zu diesem ermittelten Position und Orientierung mit seiner Zugfahrzeugkontur oder mit seinem Volumenmodell grafisch in einer zweidimensionalen Karte oder in einem dreidimensionalen Raum darzustellen. Hierdurch wird dem Fahrer die Orientierung von Zugfahrzeug und Last verdeutlicht, somit ist die Wahrscheinlichkeit geringer, dass dieser unerwünschte Fahrmanöver einleitet.

Die Erfindung sieht auch vor, die zweidimensionale Karte und/oder den dreidimensionalen Raum auf einem Darstellungsmittel, insbesondere einem Monitor zu zeigen, wobei auf dem Monitor insbesondere auch die Hindernisse und insbesondere auch Fahrwege dargestellt werden. Hierdurch kann vom Fahrer auch bei schlechten Sichtverhältnissen die Rangierbewegung vorausschauend geplant werden. Weiterhin ermöglich es das System den Fahrer auch virtuellen Fahrwegen zu folgen.

Weiterhin sieht die Erfindung vor, auf dem Darstellungsmittel zwei- oder dreidimensional insbesondere auch die Hindernisse mit ihren Konturen bzw. Volumenmodellen zu zeigen, wobei die Konturen bzw. Volumenmodelle abhängig von der aktuellen Situation insbesondere aus einer Hindernisdatenbank entnommen werden oder insbesondere bei Bedarf in diese neu eingespeist werden. Bei einem Vorhandensein eines übergeordneten Koordinationssystems ist es möglich zum Beispiel Fahrwege situationsabhängig vorzugeben und/oder die Hindernisse auf dem Darstellungsmittel abhängig von der sich verändernden Gesamtsituation einzublenden.

Die Erfindung sieht auch vor, auf der Grundlage der Relativposition der Last, auf der Grundlage einer Bewegungsrichtung des Zugfahrzeugs und auf der Grundlage einer Geschwindigkeit des Zugfahrzeugs eine Bewegung und insbesondere eine Schwenkbewegung der Last vorauszuberechnen. Hierdurch ist es möglich den Fahrer des Zugfahrzeugs rechtzeitig vor möglichen Kollisionen zu warnen oder sogar eine Notbremsung des Zugfahrzeugs einzuleiten, wenn keine Lenk- oder Bremsreaktion durch den Fahrer erfolgt, durch welche die vorausberechnete Kollision vermieden werden würde. Weiterhin sieht die Erfindung vor, auf der Grundlage der zuvor genannten Daten eine aus der Bewegung der Last resultierende Beanspruchung der Last und insbesondere Beanspruchung eines Fahrwerks der Last vorauszuberechnen. Hierdurch ist es möglich den Fahrer vor Manövern zu warnen, welche beispielsweise durch eine 90°-Stellung zwischen Zugfahrzeug und Last eine zu große Beanspruchung der Last verursachen. Insbesondere ist es auch vorgesehen, bei als kritisch erkannten Manövern automatisch eine entsprechende Bewegung des Zugfahrzeugs zu blockieren.

Das erfindungsgemäße Positions- und Orientierungsbestimmungssystem für ein Gespann, welches ein Zugfahrzeug und wenigstens eine von dem Zugfahrzeug bewegbare Last umfasst, sieht als Bestandteil des Positions- und Orientierungsbestimmungssystems eine Sensorik vor, durch die von dem Zugfahrzeug aus eine Relativposition der Last bestimmbar ist, welche die Last zu dem Zugfahrzeug einnimmt, und sieht als weiteren Bestandteil des Positions- und Orientierungsbestimmungssystem eine Recheneinheit vor, mittels welcher eine Position und insbesondere eine Orientierung der Last bestimmbar ist. Durch eine derartiges System, mit dem eine Berechung der Position bzw. der Orientierung der Last möglich ist, welche ausschließlich auf Daten beruht, welche von dem Zugfahrzeug aus ermittelbar sind, ist es möglich, ohne dass eine wesentliche Manipulation an der Last erforderlich ist, die Position bzw. die Orientierung der Last dem System verfügbar zu machen. Kern der Erfindung ist somit ein System zur Fernbestimmung der Position bzw. der Orientierung der Last, durch Vorrichtungen zur Erfassung und Zusammenführung von Daten aus unterschiedlichen Systemen.

Die Erfindung sieht weiterhin vor, die Sensorik an dem Zugfahrzeug anzuordnen. Hierdurch ist das Positions- und Orientierungsbestimmungssystem unabhängig von der Last und kann für eine Vielzahl von Lasten verwendet werden.

Die Erfindung sieht auch vor, die Sensorik mit einem optischen Sensor auszustatten, welcher insbesondere als Kamerasystem ausgeführt ist, wobei das Kamerasystem auf die Last ausgerichtet ist. Eine derartige Sensorik kann durch eine entsprechende Programmierung eines zu der Sensorik gehörenden Bilderkennungssystems für die unterschiedlichsten Lasten Verwendung finden. Insbesondere ist mit einem derartigen System auch eine automatische Detektierung des Lasttyps möglich. Eine derartige Sensorik erlaubt auch das Detektieren bzw. Erkennen unterschiedlicher Flugzeugtypen, welche als Lasten von dem Zugfahrzeug geschleppt werden müssen.

Schließlich sieht die Erfindung vor das Zugfahrzeug und das Flugzeug insbesondere im Bereich des Bugrads drehbar um eine vertikale Drehachse zu verbinden. Hierdurch besteht zwischen Zufahrzeug und Last eine einfach berechenbare Kinematik, welche eine schnelle Kalkulation von möglichen Kollisionspunkten auch mit geringer Rechenleistung erlaubt.

Im Sinne der Erfindung wird unter einer Position eines Zugfahrzeugs eine durch Koordinaten beschreibbare Position des Zugfahrzeugs in einem zwei- oder dreidimensionalen Referenzsystem verstanden. Die Position wird beispielsweise durch geografische Koordinaten beschrieben, welche mittels einer Positionsbestimmungseinrichtung, insbesondere einer Satellitennavigationseinrichtung wie zum Beispiel GPS, erfasst wird.

Im Sinne der Erfindung wird unter einer Position einer Last eine durch Koordinaten beschreibbar Position der Last, welche diese in einem zwei- oder dreidimensionalen Referenzsystem absolut einnimmt oder welche diese in einem zwei- oder dreidimensionalen Referenzsystem relativ zu einer Position des Zugfahrzeugs einnimmt, verstanden. Eine absolute Position wird beispielsweise durch geografische Koordinaten beschrieben.

Im Sinne der Erfindung wird unter einer Orientierung des Zugfahrzeugs bzw. einer Orientierung der Last eine durch einen Richtungspfeil oder eine Kontur oder einem Volumenmodell in einem zwei- oder dreidimensionalen Referenzsystem darstellbare Ausrichtung des Zugfahrzeugs bzw. der Last verstanden.

Im Sinne der Erfindung wird unter einem Ortungssystem ein System verstanden, welches eine Positionsbestimmungseinrichtung und/oder eine Orientierungsbestimmungseinrichtung umfasst.

Weitere Einzelheiten der Erfindung werden in der Zeichnung anhand eines schematisch dargestellten Ausführungsbeispiels beschrieben.

Hierbei zeigt:

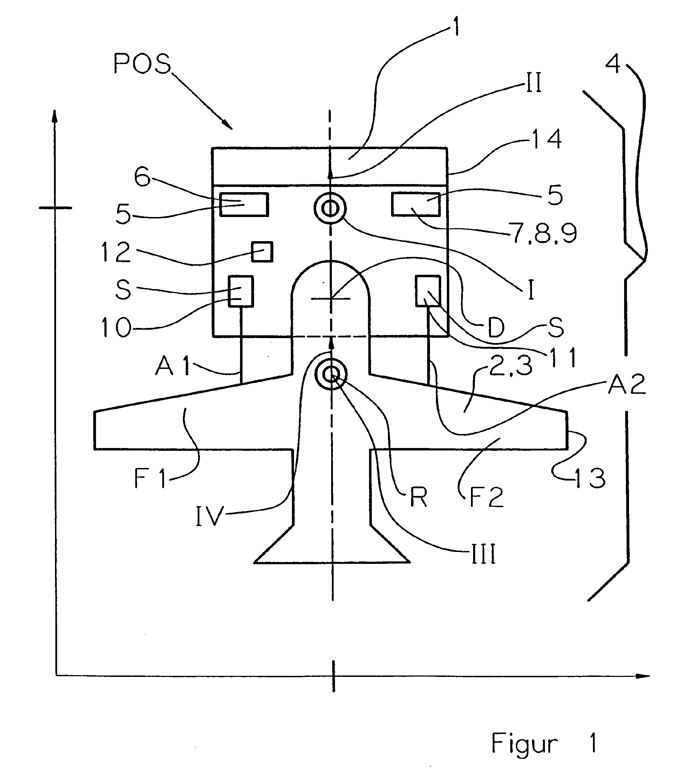

- Figur 1 - 2:: eine Draufsicht auf ein Zugfahrzeug und eine Last in zwei unterschiedlichen Positionen und Orientierungen in schematischer Darstellung.

In der Figur 1 ist eine Draufsicht auf ein Zugfahrzeug 1 und eine Last 2 dargestellt. Die Last 2 ist als Flugzeug 3 ausgeführt. Das Zugfahrzeug 1 und die Last 2 bilden zusammen ein Gespann 4. Im Zugfahrzeug 1 ist ein Ortungssystem 5 angeordnet, welches eine Positionsbestimmungseinrichtung 6 umfasst, die zur Bestimmung einer Position I des Zugfahrzeugs 1 dient. Um eine Orientierung II des Zugfahrzeugs 1 auch im Stillstand des Zugfahrzeugs 1 neu bestimmen zu können weist das Zugfahrzeug 1 eine zweite Positionsbestimmungseinrichtung 7 auf, welche in einer bekannten Stellung zu der ersten Positionsbestimmungseinrichtung 6 in dem Zugfahrzeug 1 angeordnet ist. Gemäß einer ersten Ausführungsvariante ist statt der zweiten Positionsbestimmungseinrichtung 7 ein Kompass 8 vorhanden, mittels welchem die Orientierung II des Zugfahrzeugs 1 bestimmbar ist. Gemäß einer zweiten Ausführungsvariante sind statt einer zweiten Positionsbestimmungseinrichtung 7 und statt eines Kompass 8 in einem Speicher 9 Daten einer vorhergehenden Position des Zugfahrzeugs 1 vorhanden, aus welchen die Orientierung II des Zugfahrzeugs 1 bestimmbar ist.

Das Zugfahrzeug 1 ist mit der Last 2 drehbar um eine vertikale Drehachse D verbunden. Zur Bestimmung einer Relativposition R, welche die Last 2 zu dem Zugfahrzeug 1 in Bezug auf die Position I des Zugfahrzeugs 1 einnimmt, weist das Zugfahrzeug 1 eine Sensorik S auf, mittels derer die Relativposition R bestimmbar ist. Im Ausführungsbeispiel umfasst die Sensorik S zwei Entfernungsmesser 10 und 11, welche Abstände A1 und A2 erfassen, welche Flügel F1 und F2 der als Flugzeug 3 ausgeführten Last 2 zu den Entfernungsmessern 10, 11 aufweisen. Auf der Grundlage der Position I des Zugfahrzeugs 1, der Orientierung II des Zugfahrzeugs 1 und der Relativposition R der Last 2 zu dem Zugfahrzeug ist nun von einem Positions- und Orientierungssystem POS eine Position III und eine Orientierung IV der Last 2 berechenbar. Das Positions- und Orientierungssystem POS umfasst die Sensoren 10, 11 und das Ortungssystem 5, mittels welchem die Position I und die Orientierung II des Zugfahrzeugs 1 ermittelbar ist. Weiterhin umfasst das Positions- und Orientierungssystem POS eine Recheneinheit 12, in welcher die Relativposition R und insbesondere die Position III und die Orientierung IV der Last 2 berechenbar ist. Hierbei verfügt die Recheneinheit 12 über Informationen über die Abmessungen der Last 2 und/oder über die Abmessungen des Zugfahrzeugs 1 und über Informationen über die Kinematik zwischen dem Zugfahrzeug 1 und der Last 2. In der Figur 1 ist eine senkrechte Projektion der Last 2 als Lastkontur 13 dargestellt. Ebenso ist eine senkrechte Projektion des Zugfahrzeugs 1 als Zugfahrzeugkontur 14 dargestellt. Diese Konturen 13, 14 sind maßstabsgerecht auf einer zweidimensionalen Karte 15 dargestellt, welche durch ein xy-Koordinatensystem 15 angedeutet ist.

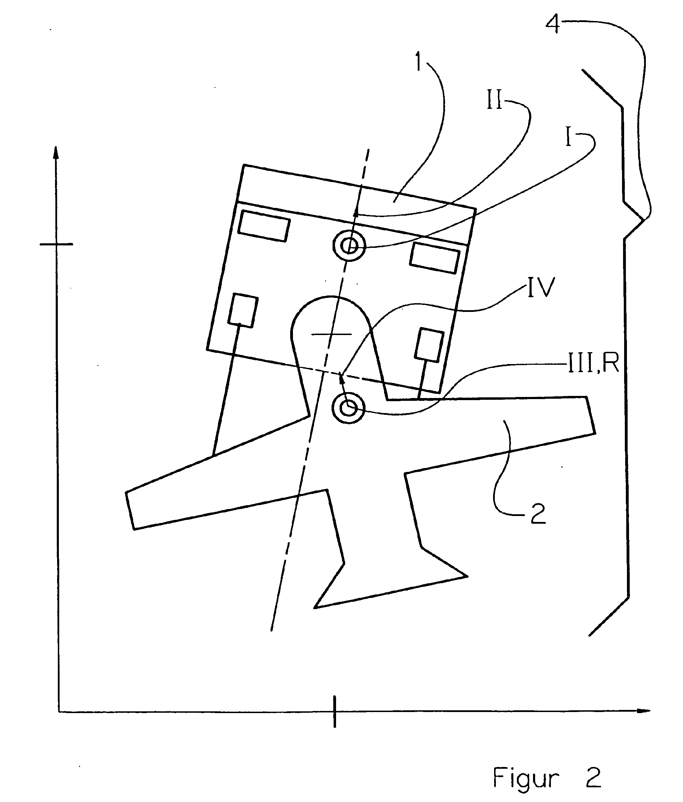

In der Figur 2 ist das aus der Figur 1 bekannte Gespann 4 nochmals dargestellt, wobei das Zugfahrzeug 1 und die Last 2 anderen Positionen I bzw. III und Orientierungen II bzw. IV bzw. wobei die Last 2 eine andere Relativposition R zu dem Zugfahrzeug 1 einnimmt.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

Insbesondere ist es vorgesehen, aus einem Zugfahrzeug und wenigstens zwei Lasten ein mehrgliedriges Gespann zu bilden, bei welchem die Relativposition jeder Last erfassbar ist.

Weiterhin ist es insbesondere vorgesehen für das Darstellungsmittel, auf welchem die Situation insbesondere für den Fahrer des Zugfahrzeugs zwei- oder dreidimensional dargestellt wird, einen Assistenten zu generieren, durch welchen wahlweise eine Sicht auf die Last bzw. das Flugzeug insbesondere aus einer Vogelperspektive und/oder das Mapping der Koordinaten von Flugzeug und Zugfahrzeug und/oder Fahrwege und/oder Hindernisse eingeblendet werden.

### Bezugszeichenliste:

- 1: Zugfahrzeug
- 2: Last
- 3: Flugzeug
- D: vertikale Drehachse zwischen Zugfahrzeug und Last
- 4: Gespann
- 5: Ortungssystem
- 6: Positionsbestimmungseinrichtung
- 7: zweite Positionsbestimmungseinrichtung
- 8: Kompass
- 9: Speicher
- 10: Entfernungsmesser
- 11: Entfernungsmesser
- 12: Recheneinheit zur Bestimmung der Position bzw. Orientierung der Last
- 13: Lastkontur
- 14: Zugfahrzeugkontur
- 15: zweidimensionale Karte
- I: Position des Zugfahrzeugs
- II: Orientierung des Zugfahrzeugs
- III: Position der Last
- IV: Orientierung der Last R Relativposition der Last zu dem Zugfahrzeug
- A1: Abstand zwischen 10 und F1
- A2: Abstand zwischen 11 und F2
- F1: linker Flügel von 3
- F2: rechter Flügel von 3
- POS: Positions- und Orientierungsbestimmungssystem
- S: Sensorik

## Patentansprüche

1. Verfahren zur Bestimmung einer Position (III) und/oder Orientierung (IV) einer verfahrbaren Last (2), wobei die Last als Flugzeug (3) ausgebildet ist, wobei das Flugzeug (3) mit einem Zugfahrzeug (1) verbunden ist, wobei eine Relativposition (R) des Flugzeugs (3), welche das Flugzeug (3) zu dem Zugfahrzeug (1) in einem zwei- oder dreidimensionalen Referenzsystem einnimmt, mittels einer Sensorik (S) erfassbar ist, **dadurch gekennzeichnet, dass** eine Position (I) und eine Orientierung (II) des Zugfahrzeugs (1) bestimmbar ist und dass die Position (III) des Flugzeugs (3), nämlich eine durch Koordinaten beschreibbare Position des Flugzeugs (3), welche dieses in einem zwei- oder dreidimensionalen Referenzsystem einnimmt, und die Orientierung (IV) des Flugzeugs (3), nämlich eine durch einen Richtungspfeil oder eine Kontur oder ein Volumenmodell in einem zwei- oder dreidimensionalen Referenzsystem darstellbare Ausrichtung des Flugszeugs (3), aus der Position (I) des Zugfahrzeugs (1) und der Relativposition (R) des Flugszeugs (3) bestimmt wird.

2. Verfahren nach Anspruch 1, **dadurch gekennzeichnet, dass** zur Bestimmung der Position (III) und/oder der Orientierung (IV) der Last (2) zusätzlich die Orientierung (II) des Zugfahrzeugs (1) verwendet wird.

3. Verfahren nach einem der vorhergehenden Ansprüche, **dadurch gekennzeichnet, dass** die Position (I) und die Orientierung (II) des Zugfahrzeugs (1) mittels eines Ortungssystems (5) bestimmbar ist, wobei von dem Ortungssystem (5) zur Bestimmung der Orientierung (II) des Zugfahrzeugs (1) entweder
- zwei voneinander beabstandete Positionsbestimmungseinrichtungen (6, 7) verwendet werden oder
- eine Positionsbestimmungseinrichtung (6) und ein Kompass (8) verwendet werden oder
- eine Positionsbestimmungseinrichtung (6) und Daten einer vorhergehenden Position des Zugfahrzeugs (1) verwendet werden.

4. Verfahren nach einem der vorhergehenden Ansprüche, **dadurch gekennzeichnet, dass** auf der Grundlage der ermittelten Position (III) und/oder Orientierung (IV) der Last (2), abhängig von der durch eine senkrechte Projektion der Last (2) ermittelten Lastkontur (13) oder abhängig von einem Volumenmodell der Last (2), die Last (2) mit der Lastkontur (13) grafisch in einer zweidimensionalen Karte (15) oder das Volumenmodell grafisch in einem dreidimensionalen Raum dargestellt wird, wobei insbesondere anhand von Kartendaten oder Raumdaten Kollisionspunkte zwischen der Last (2) und Hindernissen bei bestimmten Fahrbewegungen des Zugfahrzeugs (1) berechnet werden, wobei die Hindernisse mit den Kartendaten oder den Raumdaten erfasst sind.

5. Verfahren nach einem der vorhergehenden Ansprüche, **dadurch gekennzeichnet, dass** auf der Grundlage der ermittelten Position (I) und Orientierung (II) des Zugfahrzeugs (1), abhängig von der durch eine senkrechte Projektion des Zugfahrzeugs (1) ermittelten Zugfahrzeugkontur (14) oder abhängig von einem Volumenmodell des Zugfahrzeugs (1), das Zugfahrzeug (1) mit der Zugfahrzeugkontur (14) grafisch in einer zweidimensionalen Karte (15) oder das Volumenmodell grafisch in einem dreidimensionalen Raum dargestellt wird.

6. Verfahren nach Anspruch 4 oder 5, **dadurch gekennzeichnet, dass** die zweidimensionale Karte und/oder der dreidimensionale Raum auf einem Darstellungsmittel, insbesondere einem Monitor dargestellt werden, wobei auf dem Monitor insbesondere auch die Hindernisse und insbesondere auch Fahrwege dargestellt werden und dass insbesondere in der zweidimensionale Karte und/oder insbesondere in dem dreidimensionalen Raum auf dem Darstellungsmittel insbesondere auch die Hindernisse mit ihren Konturen bzw. Volumenmodellen gezeigt werden, wobei die Konturen bzw. Volumenmodelle abhängig von der aktuellen Situation insbesondere aus einer Hindernisdatenbank entnommen werden oder insbesondere in diese neu eingespeist werden.

7. Verfahren nach einem der vorhergehenden Ansprüche, **dadurch gekennzeichnet, dass** auf der Grundlage der Relativposition (R) der Last (2), welche die Last (2) zu dem Zugfahrzeug (1) einnimmt, und auf der Grundlage einer Bewegungsrichtung und einer Geschwindigkeit des Zugfahrzeugs (1) eine Bewegung und insbesondere eine Schwenkbewegung der Last (2) vorausberechnet wird.

8. Verfahren nach einem der vorhergehenden Ansprüche, **dadurch gekennzeichnet, dass** auf der Grundlage der Relativposition (R) der Last (2), welche die Last (2) zu dem Zugfahrzeug (1) einnimmt, und auf der Grundlage einer Bewegungsrichtung und einer Geschwindigkeit des Zugfahrzeugs (1) eine aus der Bewegung der Last (2) resultierende Beanspruchung der Last (2) und insbesondere Beanspruchung eines Fahrwerks der Last (2) vorausberechnet wird und wobei insbesondere die geometrischen Abmaße verschiedener Typen von Lasten (2), die zur Berechnung von Kollisionspunkten, welche sich durch Bewegungen der Last insbesondere an deren Extremitäten ergeben, nach einer insbesondere automatischen Identifikation des Typs oder nach Eingabe des Typs durch ein Typ-Pattern dargestellt werden.

9. Verfahren nach einem der vorhergehenden Ansprüche, **dadurch gekennzeichnet, dass** die verschiedenen Lastkonturen (13) oder die verschiedenen Volumenmodelle der Lasten (2) der unterschiedlichen Lasten (2) bzw. Flugzeugtypen in einer Datenbank gespeichert werden und/oder aus einer Datenbank abgerufen werden.

10. Verfahren nach einem der vorhergehenden Ansprüche, **dadurch gekennzeichnet, dass** geparkte Lasten (2), insbesondere Flugzeuge (3) und andere Hindernisse mit ihren Konturen und/oder Volumenmodellen und insbesondere ihrer Position und/oder Orientierung in einer Hindernisdatenbank gespeichert werden und aus einer Hindernisdatenbank abgerufen werden.

11. Verfahren nach einem der vorhergehenden Ansprüche 9 oder 10, **dadurch gekennzeichnet, dass** Kollisionswarnungen unter Verwendung der Datenbank für Typen von Lasten (2) und/oder unter Verwendung der Hindernisdatenbank errechnet werden.

12. Positions- und Orientierungsbestimmungssystem (POS) für ein Gespann (4), welches ein Zugfahrzeug (1) und wenigstens zeine von dem Zugfahrzeug (1) bewegbare Last (4) umfasst, wobei die Last (2) als Flugzeug (3) ausgebildet ist und wobei das Positions- und Orientierungsbestimmungssystem (POS) eine Sensorik (S) umfasst, mittels welcher von dem Zugfahrzeug (1) aus eine Relativposition (R) des Flugzeugs (3) bestimmbar ist, welche das Flugzeug (3) zu dem Zugfahrzeug (1) einnimmt, **dadurch gekennzeichnet, dass** das Positions- und Orientierungsbestimmungssystem (POS) ein Ortungssystem (5) umfasst, mit dem eine Position (I) und eine Orientierung (II) des Zugfahrzeugs (1) bestimmbar ist und dass das Positions- und Orientierungsbestimmungssystem (POS) eine Recheneinheit (12) umfasst, mittels welcher eine Position (III) des Flugzeugs (3), nämlich eine durch Koordinaten beschreibbare Position des Flugszeugs (3), welche dieses in einem zwei- oder dreidimensionalen Referenzsystem einnimmt, und eine Orientierung (IV) des Flugzeugs (3), nämlich eine durch einen Richtungspfeil oder eine Kontur oder ein Volumenmodell in einem zwei- oder dreidimensionalen Referenzsystem darstellbare Ausrichtung des Flugzeugs (3) bestimmbar ist.

13. Positions- und Orientierungsbestimmungssystem nach Anspruch 12, **dadurch gekennzeichnet, dass** die Sensorik (S) an dem Zugfahrzeug (1) angeordnet.

14. Positions- und Orientierungsbestimmungssystem nach Anspruch 13, **dadurch gekennzeichnet, dass** die Sensorik (S) insbesondere einen optischen Sensor umfasst, welcher insbesondere als Kamerasystem ausgebildet ist, das auf die Last (2) ausgerichtet ist.

15. Positions- und Orientierungsbestimmungssystem nach einem der Ansprüche 12 bis 14, **dadurch gekennzeichnet, dass** die bewegbare Last (2) als Flugzeug (3) ausgebildet ist und dass das Zugfahrzeug (1) mit dem Flugzeug (3) insbesondere im Bereich des Bugrads drehbar um eine vertikale Drehachse (D) verbunden ist.

## Claims

1. Method for determining a position (III) and/or orientation (IV) of a movable load (2), the load being in the form of an aircraft (3), wherein the aircraft (3) is connected to a towing vehicle (1), wherein a relative position (R) of the aircraft (3) that the aircraft (3) adopts relative to the towing vehicle (1) in a two or three-dimensional reference system can be determined by means of a sensor system (S), **characterised in that** a position (I) and an orientation (II) of the towing vehicle (1) can be determined, and **in that** the position (III) of the aircraft (3), namely a position of the aircraft (3) describable by coordinates, that the latter adopts in a two or three-dimensional reference system, and the orientation (IV) of the aircraft (3), namely an alignment of the aircraft (3) represented by a directional arrow or a contour or a volume model in a two or three-dimensional reference system is determined from the position (I) of the towing vehicle (1) and the relative position (R) of the aircraft (3).

2. Method according to claim 1, **characterised in that** the orientation (II) of the towing vehicle (1) is used in addition to determine the position (III) and/or the orientation (IV) of the load (2).

3. Method according to one of the preceding claims, **characterised in that** the position (I) and the orientation (II) of the towing vehicle (1) can be determined by means of a position-locating system (5), wherein to determine the orientation (II) of the towing vehicle (1) by means of the position-locating system (5) either
- two spaced part position-determining devices (6, 7) are used or
- one position-determining device (6) and a compass (8) are used or
- one position-determining device (6) and data relating to a previous position of the towing vehicle (1) are used.

4. Method according to any one of the preceding claims, **characterised in that** on the basis of the determined position (III) and/or orientation (IV) of the load (2), depending on the load contour (13) determined by a vertical projection of the load (2) or depending on a volume model of the load (2), the load (2) with the load contour (13) is represented graphically on a two-dimensional chart (15) or the volume model is represented graphically in three-dimensional space, wherein in particular with reference to chart data or three-dimensional data collision points are calculated between the load (2) and obstacles for specific driving movements of the towing vehicle (1), wherein the obstacles are determined using the chart data or the three-dimensional data.

5. Method according to any one of the preceding claims, **characterised in that** on the basis of the determined position (I) and orientation (II) of the towing vehicle (I), depending on the towing vehicle contour (14) determined by a vertical projection of the towing vehicle (1) or depending on a volume model of the towing vehicle (1), the towing vehicle (1) with the towing vehicle contour (14) is represented graphically in a two-dimensional chart (15) or the volume model is represented graphically in a three-dimensional space.

6. Method according to claim 4 or 5, **characterised in that** the two-dimensional chart and/or the three-dimensional space is/are represented on a display means, in particular a monitor, wherein also the obstacles and in particular also driving paths are displayed on the monitor, and **in that** in particular the obstacles are also displayed with their contours and volume models in particular on the two-dimensional chart and/or in particular in the three-dimensional space on the display means, wherein the contours and volume models respectively are taken in particular from an obstacle database or in particular are newly entered into said obstacle database, according to the current situation.

7. Method according to any one of the preceding claims, **characterised in that** on the basis of the relative position (R) of the load (2) that the load (2) adopts with respect to the towing vehicle (1), and on the basis of a movement direction and a speed of the towing vehicle (1) a movement and in particular a pivoting movement of the load (2) is calculated in advance.

8. Method according to any one of the preceding claims, **characterised in that** on the basis of the relative position (R) of the load (2) that the load (2) adopts with respect to the towing vehicle (1), and on the basis of a movement direction and a speed of the towing vehicle (1) stress on the load (2) resulting from the movement of the load (2) and in particular stress on an undercarriage of the load (2) is calculated in advance, and wherein in particular the geometric dimensions of various types of loads (2) used for calculating collision points which result from movements of the load in particular at its extremities, are represented according to an in particular automatic identification of the type or according to the input of the type by means of a type pattern.

9. Method according to any one of the preceding claims, **characterised in that** the various load contours (13) or the various volume models of the loads (2) of the various loads (2) or aircraft types are stored in a database and/or are downloaded from a database.

10. Method according to any one of the preceding claims, **characterised in that** parked loads (2), in particular aircraft (3) and other obstacles, are stored with their contours and/or volume models and in particular their position and/or orientation in an obstacle database, and are downloaded from an obstacle database.

11. Method according to any one of the preceding claims 9 or 10, **characterised in that** collision warnings are calculated by using the database for types of loads (2) and/or by using the obstacle database.

12. Position and orientation determining system (POS) for a group (4), which comprises a towing vehicle (1) and at least one load (4) which can be moved by the towing vehicle (1), the load (2) being in the form of an aircraft (3), and wherein the position and orientation determining system (POS) comprises a sensor system (S), by means of which a relative position (R) of the aircraft (3) can be determined from the towing vehicle (1) that the aircraft (3) adopts relative to the towing vehicle (1), **characterised in that** the position and orientation determining system (POS) comprises a position locating system (5) by means of which a position (I) and an orientation (II) of the towing vehicle (1) can be determined and **in that** the position and orientation determining system (POS) comprises a calculating unit (12), by means of which a position (III) of the aircraft (3) can be determined, namely a position of the aircraft (3) described by coordinates that the latter adopts in a two or three-dimensional reference system, and an orientation (IV) of the aircraft (3), namely an alignment of the aircraft (3) which can be represented by a directional arrow or a contour or a volume model in a two or three-dimensional reference system.

13. Position and orientation determining system according to claim 12, **characterised in that** the sensor system (S) is arranged on the towing vehicle (1).

14. Position and orientation determining system according to claim 13, **characterised in that** the sensor system (S) comprises in particular an optical sensor which in particular is in the form of a camera system which is directed at the load (2).

15. Position and orientation determining system according to any one of claims 12 to 14, **characterised in that** the movable load (2) is in the form of an aircraft (3), and **in that** the towing vehicle (1) is connected to the aircraft (3) in particular in the area of the nose wheel such that it can rotate about a vertical axis of rotation (D).

## Revendications

1. Procédé permettant de déterminer une position (III) et/ou une orientation (IV) d'une charge (2) mobile, ladite charge étant réalisée sous forme d'aéronef (3), ledit aéronef (3) étant attelé à un véhicule tracteur (1), une position relative (R) de l'aéronef (3), que prend l'aéronef (3) par rapport au véhicule tracteur (1) dans un système de référence bidimensionnel ou tridimensionnel, pouvant être détectée au moyen d'un système de détection (S), **caractérisé en ce qu'**il est possible de déterminer une position (I) et une orientation (II) du véhicule tracteur (1) et **en ce qu'**à partir de la position (I) du véhicule tracteur (1) et la position relative (R) de l'aéronef (3), on détermine la position (III) de l'aéronef (3), à savoir une position de l'aéronef (3) qui peut être décrite par des coordonnées et que prend celui-ci dans un système de référence bidimensionnel ou tridimensionnel, et l'orientation (IV) de l'aéronef (3), à savoir un alignement de l'aéronef (3) pouvant être représenté par une flèche de direction ou un contour ou un modèle volumique dans un système de référence bidimensionnel ou tridimensionnel.

2. Procédé selon la revendication 1, **caractérisé en ce que** pour déterminer la position (III) et/ou l'orientation (IV) de la charge (2), on utilise, en plus, l'orientation (II) du véhicule tracteur (1).

3. Procédé selon l'une quelconque des revendications précédentes, **caractérisé en ce que** la position (I) et l'orientation (II) du véhicule tracteur (1) peuvent être déterminées au moyen d'un système de localisation (5), ledit système de localisation (5) utilisant pour la détermination de l'orientation (II) du véhicule tracteur (1) :
- soit deux dispositifs de détermination de la position (6, 7), écartés l'un de l'autre,
- soit un dispositif de détermination de la position (6) et un compas (8),
- soit un dispositif de détermination de la position (6) et des données d'une position précédente du véhicule tracteur (1).

4. Procédé selon l'une quelconque des revendications précédentes, **caractérisé en ce que** sur la base de la position (III) et/ou de l'orientation (IV) calculées de la charge (2), en fonction du contour (13) de la charge, déterminé par une projection verticale de la charge (2), ou en fonction d'un modèle volumique de la charge (2), ladite charge (2) est représentée graphiquement avec le contour (13) de la charge sur une carte (15) bidimensionnelle ou le modèle volumique est représenté graphiquement dans un espace tridimensionnel, des points de collision entre la charge (2) et des obstacles pendant des mouvements de déplacement déterminés du véhicule tracteur (1) étant calculés en particulier à l'appui des données de la carte ou des données dans l'espace, lesdits obstacles pouvant être détectés avec les données de la carte ou les données dans l'espace.

5. Procédé selon l'une quelconque des revendications précédentes, **caractérisé en ce que** sur la base de la position (I) et de l'orientation (II) calculées du véhicule tracteur (1), en fonction du contour (14) du véhicule tracteur, déterminé par une projection verticale du véhicule tracteur (1), ou en fonction d'un modèle volumique du véhicule tracteur (1), ledit véhicule tracteur (1) est représenté graphiquement avec le contour (14) du véhicule tracteur sur une carte (15) bidimensionnelle ou le modèle volumique est représenté graphiquement dans un espace tridimensionnel.

6. Procédé selon la revendication 4 ou 5, **caractérisé en ce que** la carte bidimensionnelle et/ou l'espace tridimensionnel sont représentés sur un moyen de représentation, en particulier un moniteur, les obstacles et, en particulier aussi, les trajets étant représentés sur le moniteur, et **en ce qu'**en particulier aussi les obstacles avec leurs contours ou les modèles volumiques sont également représentés sur la carte bidimensionnelle et/ou en particulier dans l'espace tridimensionnel sur le moyen de représentation, les contours ou les modèles volumiques, en fonction de la situation actuelle, étant prélevés en particulier dans une base de données des obstacles ou, en particulier, étant nouvellement enregistrés dans cette dernière.

7. Procédé selon l'une quelconque des revendications précédentes, **caractérisé en ce qu'**un déplacement et, en particulier, un mouvement de pivotement de la charge (2) sont calculés préliminairement sur la base de la position relative (R) de la charge (2), que prend ladite charge (2) par rapport au véhicule tracteur (1), et sur la base d'une direction du déplacement et d'une vitesse du véhicule tracteur (1).

8. Procédé selon l'une quelconque des revendications précédentes, **caractérisé en ce qu'**une sollicitation de la charge (2), résultant du déplacement de ladite charge (2), et, en particulier, une sollicitation d'un train d'atterrissage de la charge (2) sont calculés préliminairement sur la base de la position relative (R) de la charge (2), que prend ladite charge (2) par rapport au véhicule tracteur (1), et sur la base d'une direction du déplacement et d'une vitesse du véhicule tracteur (1), et, en particulier, les dimensions géométriques de différents types de charges (2), utilisées pour calculer les points de collision qui résultent des déplacements de la charge, notamment aux extrémités de celle-ci, étant représentées par un modèle standard après une identification en particulier automatique du type ou après la saisie du type.

9. Procédé selon l'une quelconque des revendications précédentes, **caractérisé en ce que** les différents contours (13) de la charge ou les différents modèles volumiques des charges (2) des diverses charges (2) ou types d'aéronefs sont enregistrés dans une base de données et/ou sont extraits d'une base de données.

10. Procédé selon l'une quelconque des revendications précédentes, **caractérisé en ce que** des charges (2) en stationnement, en particulier des aéronefs (3), et d'autres obstacles, y compris leurs contours et/ou leurs modèles volumiques et, en particulier, leur position et/ou leur orientation, sont enregistrés dans une base de données des obstacles et sont extraits d'une base de données des obstacles.

11. Procédé selon la revendication 9 ou 10, **caractérisé en ce que** les avertissements de collision sont calculés moyennant l'utilisation de la base de données pour les types de charges (2) et/ou moyennant l'utilisation de la base de données des obstacles.

12. Système de détermination de la position et de l'orientation (POS) pour un attelage (4) qui comporte un véhicule tracteur (1) et au moins une charge (2) tractée par le véhicule tracteur (1), ladite charge (2) étant réalisée sous forme d'aéronef (3) et le système de détermination de la position et de l'orientation (POS) comportant un système de détection (S) qui permet de déterminer, à partir du véhicule tracteur (1), une position relative (R) de l'aéronef (3), que prend ledit aéronef (3) par rapport au véhicule tracteur (1), **caractérisé en ce que** le système de détermination de la position et de l'orientation (POS) comporte un système de localisation (5) qui permet de déterminer une position (I) et une orientation (II) du véhicule tracteur (1), et **en ce que** le système de détermination de la position et de l'orientation (POS) comporte une unité de calcul (12) qui permet de déterminer une position (III) de l'aéronef (3), à savoir une position de l'aéronef (3) qui peut être décrite par des coordonnées et que prend l'aéronef (3) dans un système de référence bidimensionnel ou tridimensionnel, et une orientation (IV) de l'aéronef (3), à savoir un alignement de l'aéronef (3) pouvant être représenté par une flèche de direction ou un contour ou un modèle volumique dans un système de référence bidimensionnel ou tridimensionnel.

13. Système de détermination de la position et de l'orientation selon la revendication 12, **caractérisé en ce que** le système de détection (S) est disposé sur le véhicule tracteur (1).

14. Système de détermination de la position et de l'orientation selon la revendication 13, **caractérisé en ce que** le système de détection (S) comporte en particulier un capteur optique, qui est configuré en particulier sous forme de système de caméra qui est orienté vers la charge (2).

15. Système de détermination de la position et de l'orientation selon l'une quelconque des revendications 12 à 14, **caractérisé en ce que** la charge (2) mobile est réalisée sous forme d'aéronef (3), et **en ce que** le véhicule tracteur (1) est attelé à l'aéronef (3), en particulier dans la région de la roue avant pour pouvoir tourner autour d'un axe de rotation (D) vertical.
